# EUROPEAN PATENT SPECIFICATION

(11) **EP 4 243 175 B1**
(45) Date of publication and mention of the grant of the patent: **17.09.2025**
(21) Application number: 22837984.8
(22) Date of filing: 06.07.2022
(51) Int. Cl.: H01M 50/30, H01M 50/342, H01M 50/178, H01M 50/186

(54) **BATTERY CELL AND BATTERY CELL MANUFACTURING APPARATUS FOR MANUFACTURING SAME**
BATTERIEZELLE UND VORRICHTUNG ZUR HERSTELLUNG EINER BATTERIEZELLE
ÉLÉMENT DE BATTERIE ET SON APPAREIL DE FABRICATION

(30) Priority: 06.07.2021 KR 20210088727; 04.07.2022 KR 20220081997
(43) Date of publication of application: 13.09.2023
(73) Proprietor: LG Energy Solution, Ltd., Seoul 07335 (KR)
(72) Inventor: SONG, Dae-Woong, Daejeon 34122 (KR); KIM, Sang-Hun, Daejeon 34122 (KR); KANG, Min-Hyeong, Daejeon 34122 (KR); YU, Hyung-Kyun, Daejeon 34122 (KR); LIM, Hun-Hee, Daejeon 34122 (KR); HWANG, Soo-Ji, Daejeon 34122 (KR)
(74) Representative: Plasseraud IP
(86) International application number: PCT/KR2022/009786
(87) International publication number: WO 2023/282632

(56) References cited:
- JP-A- 2005 038 707
- KR-A- 20140 129 600
- KR-A- 20170 027 150
- KR-A- 20180 095 982
- KR-A- 20210 025 407
- KR-B1- 101 904 587
- KR-B1- 101 947 149
- KR-B1- 101 947 149
- US-A1- 2019 036 180

## Description

### TECHNICAL FIELD

The present disclosure relates to a battery cell and a battery cell manufacturing apparatus for manufacturing the same, and more particularly, to a battery cell with improved external emission of gas generated inside the battery cell while enhancing sealing strength and safety, and a battery cell manufacturing apparatus for manufacturing the same. The present application claims priority to Korean Patent Application No. 10-2021-0088727 filed on July 6, 2021, and Korean Patent Application No. 10-2022-0081997 filed on July 4, 2022 in the Republic of Korea.

### BACKGROUND ART

As technology development and demand for mobile devices increase, the demand for secondary batteries as an energy source is rapidly increasing. In particular, secondary batteries are of great interest as energy sources not only for mobile devices such as mobile phones, digital cameras, notebooks and wearable devices, but also for power devices such as electric bicycles, electric vehicles and hybrid electric vehicles.

Depending on the shape of a battery case, these secondary batteries are classified into a cylindrical battery and a prismatic battery in which an electrode assembly is included in a cylindrical or prismatic metal can, and a pouch-type battery in which the electrode assembly is included in a pouch-type case of an aluminum laminate sheet. Here, the electrode assembly included in the battery case is a power element including a positive electrode, a negative electrode, and a separator interposed between the positive electrode and the negative electrode, and capable of charging and discharging, and is classified into a jelly-roll type in which long sheet-type positive and negative electrodes coated with an active material are wound with a separator being interposed therebetween, and a stack type in which a plurality of positive and negative electrodes are sequentially stacked with a separator being interposed therebetween.

Among them, in particular, a pouch-type battery in which a stack-type or stack/folding-type electrode assembly is included in a pouch-type battery case made of an aluminum laminate sheet is being used more and more due to low manufacturing cost, small weight, and easy modification.

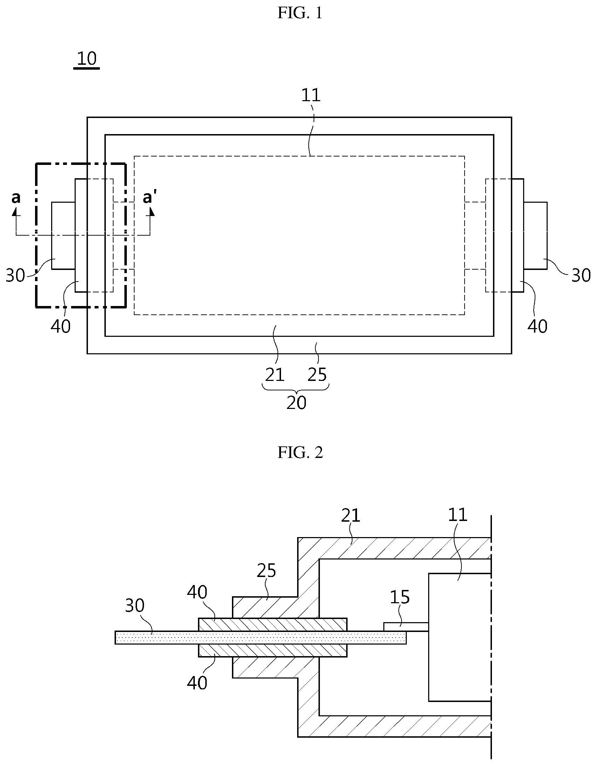

FIG. 1 is a top view showing a conventional battery cell. FIG. 2 is a cross-sectional view, taken along the axis a-a' of FIG. 1.

Referring to FIGS. 1 and 2, a conventional battery cell 10 includes a battery case 20 having an accommodation portion 21 in which an electrode assembly 11 is mounted, and a sealing portion 25 formed by sealing an outer periphery thereof. In addition, the battery cell 10 includes an electrode lead 30 electrically connected to an electrode tab 15 included in the electrode assembly 11 and protruding out of the battery case 20 via the sealing portion 25, and a lead film 40 is located between upper and lower portions of the electrode lead 30 and the sealing portion 25.

However, as the energy density of the battery cell increases in recent years, there is a problem that the amount of gas generated inside the battery cell also increases. In the case of the conventional battery cell 10, a component capable of discharging the gas generated inside the battery cell is not included, so a venting may occur to burst the battery case 20 due to gas generation in long-term storage. In addition, moisture may penetrate into the battery cell damaged by the venting, which may cause side reactions, and there is a problem that battery performance deteriorates and additional gas is generated. Accordingly, there is an increasing need to develop a battery cell with improved external emission of gas generated inside the battery cell.

Document KR 101 904 587 B1 relates to a battery cell in which a gas discharge tube is built and a method for manufacturing the same. JP 2005 038707 A relates to an electrode tab sealing material used when a lithium ion battery is packaged with an exterior material. Document KR 101 947 149 B1 relates to a sealing device for a battery case with increased pressure and heat application area.

### DISCLOSURE

### Technical Problem

The present disclosure is directed to providing a battery cell with improved external emission of gas generated inside the battery cell while enhancing sealing strength and safety, and a battery cell manufacturing apparatus for manufacturing the same.

The object to be solved by the present disclosure is not limited to the above-mentioned object, and the objects not mentioned here may be clearly understood by those skilled in the art from this specification and the accompanying drawings.

### Technical Solution

In one aspect of the present disclosure, there is provided a battery cell, comprising: a battery case having an accommodation portion in which an electrode assembly is mounted, and a sealing portion formed by sealing an outer periphery thereof; an electrode lead electrically connected to an electrode tab included in the electrode assembly and protruding out of the battery case via the sealing portion; and a lead film located at a portion corresponding to the sealing portion in at least one of an upper portion and a lower portion of the electrode lead, wherein the lead film includes a first stepped portion protruding in a direction opposite to the electrode lead, the sealing portion includes a second stepped portion surrounding an outer surface of the first stepped portion, and a gas discharge guiding unit is inserted in the first stepped portion.

A first step of the first stepped portion and a second step of the second stepped portion have a size corresponding to a height of the gas discharge guiding unit, respectively.

The first step and the second step may have the same size.

The gas discharge guiding unit may be located on a center of the electrode lead based on a width direction of the lead film.

The gas discharge guiding unit may extend along a protruding direction of the electrode lead, and an end of the gas discharge guiding unit adjacent to an outer side of the battery case may be surrounded with the lead film.

An end of the gas discharge guiding unit adjacent to an inner side of the battery case may be exposed inside the battery case. A gas discharge path may be formed at an interface between the gas discharge guiding unit and the lead film.

An adhesive force between the gas discharge guiding unit and the lead film may be smaller than at least one of an adhesive force between the lead film and the electrode lead and an adhesive force between the lead film and the sealing portion.

The gas discharge guiding unit may be a film layer made of at least one of polyimide and polyethylene terephthalate.

The gas discharge guiding unit may be a coating layer made of liquid resin.

The gas discharge guiding unit may further include a getter material containing at least one of calcium oxide (CaO), lithium chloride (LiCl), silica (SiO₂), barium oxide (BaO), barium (Ba), and calcium (Ca).

The second stepped portion may be formed to have a uniform thickness.

The gas discharge guiding unit may be located on the electrode lead, and an adhesive layer may be formed between the gas discharge guiding unit and the electrode lead.

An adhesive force between the gas discharge guiding unit and the lead film may be smaller than at least one of an adhesive force between the adhesive layer and the gas discharge guiding unit and an adhesive force between the adhesive layer and the electrode lead.

The adhesive layer may be made of an adhesive tape or an adhesive binder.

The lead film may have gas permeability of 20 Barrer to 60 Barrer at 60°C.

The lead film may have a moisture penetration amount of 0.02 g to 0.2 g for 10 years at 25°C, 50 %RH.

The gas discharge guiding unit may have gas permeability of 40 Barrer or more at 60°C.

In another aspect of the present disclosure, there is also provided a battery cell manufacturing apparatus, comprising a sealing tool configured to seal the sealing portion, the electrode lead, and the lead film together, wherein the sealing tool includes a third stepped portion concavely formed in a direction opposite to the sealing portion, and the third stepped portion surrounds the outer surface of the first stepped portion, the second stepped portion is located between the third stepped portion and the outer surface of the first stepped portion.

A first step of the first stepped portion, a second step of the second stepped portion, and a third step of the third stepped portion may have a size corresponding to a height of the gas discharge guiding unit, respectively.

The first step to the third step may have the same size.

### Advantageous Effects

According to embodiments, the present disclosure provides a battery cell in which a stepped portion is formed on a lead film and a sealing portion, respectively, and a battery cell manufacturing apparatus for manufacturing the same, and thus it is possible to improve the external emission of the gas generated inside the battery cell, while enhancing sealing strength and safety.

Specifically, according to one aspect of the present disclosure, a gas discharge path may be formed at the interface between the gas discharge guiding unit and the lead film, so that the gas in the battery cell may be effectively discharged to the outside, while securing a relatively easy manufacturing process.

According to another aspect of the present disclosure, although the first stepped portion is formed on the lead film, the sealing portion also has a second stepped portion formed at a location corresponding to the first stepped portion, the sealing strength between the sealing portion and the lead film may be improved. **In** addition, according to the high sealing strength between the sealing portion and the lead film, the vent pressure when the gas generated in the battery cell is discharged to the outside may also be increased, and safety may also be improved.

According to another aspect of the present disclosure, by adjusting the shape of the gas discharge guiding unit, it is possible to control the gas discharge performance of the gas discharge guiding unit and durability and airtightness of the lead film. **In** addition, if necessary, by changing the shape of the gas discharge guiding unit, it is possible to simplify the manufacturing process and reduce the cost.

According to another aspect of the present disclosure, by setting the gas permeability and moisture penetration amount of the lead film within a predetermined range, it may be more effective to prevent moisture penetration from the outside while discharging the gas generated inside the battery cell.

According to another aspect of the present disclosure, a battery cell manufacturing apparatus capable of manufacturing a battery cell in which a first stepped portion is formed on the lead film and the sealing portion also has a second stepped portion formed at a location corresponding to the first stepped portion may be provided. According to this battery cell manufacturing apparatus, since the battery cell may be manufactured without forming an excessive sealing portion on the sealing portion, when the excessive sealing portion is formed, it is possible to prevent the sealing strength between the excessive sealing portion and the lead film decreases from being lowered. Since the sealing strength between the sealing portion and the lead film may be maintained high, the vent pressure when the gas generated in the battery cell is discharged to the outside may also be increased, so that it is possible to manufacture a battery cell with improved safety.

The effect of the present disclosure is not limited to the above effects, and the effects not mentioned here will be clearly understood by those skilled in the art from this specification and the accompanying drawings.

### DESCRIPTION OF DRAWINGS

FIG. 1 is a top view showing a conventional battery cell.
FIG. 2 is a cross-sectional view, taken along the axis a-a' of FIG. 1.
FIG. 3 is a top view showing a battery cell according to an embodiment of the present disclosure.
FIG. 4 is an enlarged view showing a two-dot chain line region of FIG. 3.
FIG. 5 is a cross-sectional view, taken along the axis B-B' of FIG. 4.
FIG. 6 is a cross-sectional view, taken along the axis A-A' of FIG. 3.
FIG. 7 shows various shapes of a gas discharge guiding unit.
FIG. 8 is an enlarged view showing a two-dot chain line region of FIG. 6.
FIG. 9 is a view showing a gas discharge path formed at an interface between a lead film and the gas discharge guiding unit of FIG. 8.
FIG. 10 is a cross-sectional view showing a battery cell according to another embodiment of the present disclosure, taken along the B-B' axis of FIG. 4.
FIG. 11 is a cross-sectional view showing the battery cell having the cross-section of FIG. 10, taken along the axis A-A' of FIG. 3.
FIG. 12 is an enlarged view showing a two-dot chain line region of FIG. 11.
FIG. 13 is a diagram showing a gas discharge path formed at the interface between the lead film and the gas discharge guiding unit of FIG. 12.
FIG. 14 is a diagram showing a battery cell manufacturing apparatus according to another embodiment of the present disclosure, and a battery cell manufactured through the same.
FIG. 15 is a diagram showing a battery cell manufacturing apparatus according to a comparative example and a battery cell manufactured through the same.

### BEST MODE

Hereinafter, with reference to the accompanying drawings, various embodiments of the present disclosure will be described in detail so as to be easily implemented by those skilled in the art. The present disclosure may be implemented in various different forms and is not limited to the embodiments described herein.

In order to clearly explain the present disclosure, parts irrelevant to the description are omitted, and identical or similar components are endowed with the same reference signs throughout the specification.

In addition, since the size and thickness of each component shown in the drawings are arbitrarily expressed for convenience of description, the present disclosure is not necessarily limited to the drawings. In order to clearly express various layers and regions in the drawings, the thicknesses are enlarged. Also, in the drawings, for convenience of explanation, the thickness of some layers and regions is exaggerated.

In addition, throughout the specification, when a part "includes" a certain component, it means that other components may be further included, rather than excluding other components, unless otherwise stated.

In addition, throughout the specification, when referring to "top view", it means that the target part is viewed from above, and when referring to "cross-sectional view", it means that a vertically-cut section of the target part is viewed from a side.

Hereinafter, a battery cell according to an embodiment of the present disclosure will be described. However, here, the description will be made based on one end of the battery cell, but it is not necessarily limited thereto, and the same or similar contents may be described in the case of the other end of the battery cell.

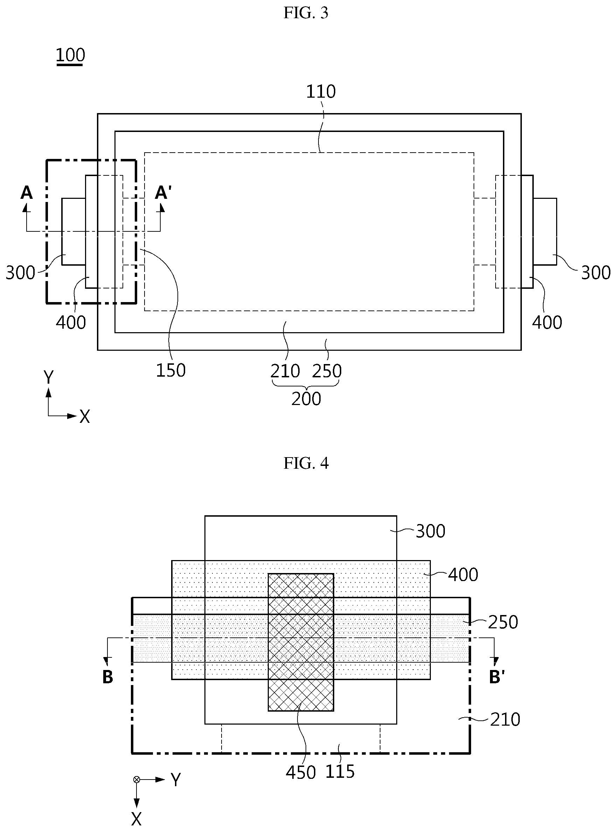

FIG. 3 is a top view showing a battery cell according to an embodiment of the present disclosure. FIG. 4 is an enlarged view showing a two-dot chain line region of FIG. 3.

Referring to FIGS. 3 and 4, the battery cell 100 according to an embodiment of the present disclosure includes a battery case 200 having an accommodation portion 210 in which an electrode assembly 110 is mounted, and a sealing portion 250 formed by sealing an outer periphery thereof; an electrode lead 300 electrically connected to an electrode tab 115 included in the electrode assembly 110 and protruding out of the battery case 200 via the sealing portion 250; and a lead film 400 located at a portion corresponding to the sealing portion 250 in at least one of an upper portion and a lower portion of the electrode lead 300. For example, the battery cell 100 has a long side in a direction along the X-axis and a short side in a direction along the Y-axis, and also has a small thickness in the Z-axis direction compared to the length of the X-axis or Y-axis, so that it may be an approximately rectangular plate-shaped cell. The electrode lead 300 may be formed at the short side of the battery cell 100. Such battery cells 100 are integrated in the Z-axis direction to stack several battery cells 100 face-to-face, which is an efficient structure to increase energy density.

The battery case 200 may be a laminate sheet including a resin layer and a metal layer. More specifically, the battery case 200 may be made of a laminate sheet, and may include an outer resin layer forming the outermost layer, a barrier metal layer preventing penetration of materials, and an inner resin layer for sealing.

The electrode assembly 110 may have a structure of a jelly-roll type (winding type), a stack type (lamination type), or a composite type (stack/folding type). More specifically, the electrode assembly 110 may include a positive electrode, a negative electrode, and a separator disposed therebetween.

The electrode lead 300 is electrically connected to an electrode tab 115 included in the electrode assembly 110, and protrudes out of the battery case 200 via the sealing portion 250. In addition, the lead film 400 is located at a portion corresponding to the sealing portion 250 in at least one of an upper portion and a lower portion of the electrode lead 300. Accordingly, the lead film 400 may improve the sealing properties of the sealing portion 250 and the electrode lead 300 while preventing a short circuit from occurring in the electrode lead 300 during thermal fusion or press fusion together with the sealing portion 250.

Referring to FIGS. 3 and 4, the lead film 400 may have a wider width than the electrode lead 300. Here, the width of the lead film 400 means a maximum value of the distance between one end and the other end of the lead film 400 in a direction (Y-axis direction) orthogonal to the protruding direction (X-axis direction) of the electrode lead 300, and the width of the electrode lead 300 means a maximum value of the distance between one end and the other end of the electrode lead 300 in a direction orthogonal to the protruding direction of the electrode lead 300.

The lead film 400 may have a length greater than the length of the sealing portion 250 based on the protruding direction of the electrode lead 300 and have a length smaller than the length of the electrode lead 300. Here, the length of the lead film 400 means a maximum value of the distance between one end and the other end of the lead film 400 in the protruding direction of the electrode lead 300. The length of the sealing portion 250 means a maximum value of the distance between one end and the other end of the sealing portion 250 in the protruding direction of the electrode lead 300. The length of the electrode lead 300 means a maximum value of the distance between one end and the other end of the electrode lead 300 in the protruding direction of the electrode lead 300. Accordingly, the lead film 400 may prevent the side surface of the electrode lead 300 from being exposed to the outside without interfering with the electrical connection of the electrode lead 300.

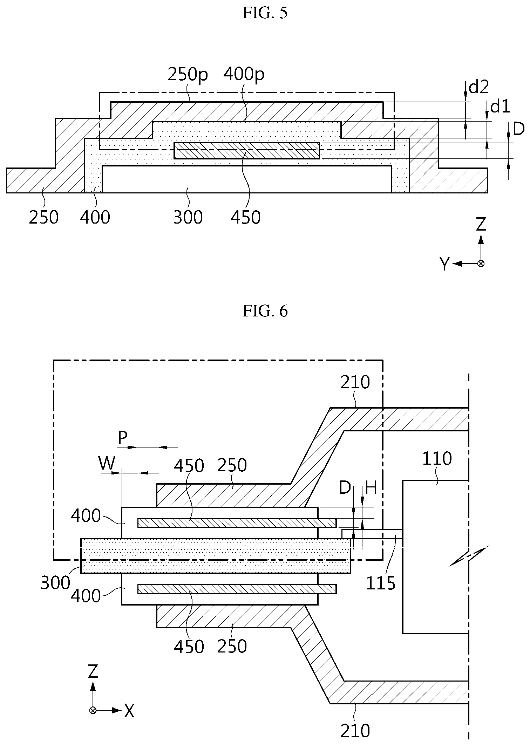

FIG. 5 is a cross-sectional view, taken along the axis B-B' of FIG. 4.

Referring to FIGS. 4 and 5, the lead film 400 includes a first stepped portion 400p protruding in a direction opposite to the electrode lead 300, and a gas discharge guiding unit 450 is inserted in the first stepped portion 400p.

Here, the first stepped portion 400p may refer to a portion protruding in a direction opposite to the electrode lead 300 with respect to the surface in which the lead film 400 and the sealing portion 250 are in contact. More specifically, the first stepped portion 400p may refer to a portion protruding in a direction opposite to the electrode lead 300 on the position where the gas discharge guiding unit 450 is inserted. In other words, in the lead film 400, the first stepped portion 400p may refer to a portion in which a step is generated between a portion where the gas discharge guiding unit 450 is inserted and a portion where the gas discharge guiding unit 450 is not inserted.

In addition, the sealing portion 250 includes a second stepped portion 250p surrounding the outer surface of the first stepped portion 400p. Here, the second stepped portion 250p may refer to a portion protruding along the protruding direction of the first stepped portion 400p with respect to the surface in which the lead film 400 and the sealing portion 250 are in contact. More specifically, the second stepped portion 250p may refer to a portion protruding along the protruding direction of the first stepped portion 400p on the position where the first stepped portion 400p is formed. In other words, in the sealing portion 250, the second stepped portion 250p may refer to a portion in which a step is generated between the portion where which the first stepped portion 400p is formed and the portion where the first stepped portion 400p is not formed.

According to the above configuration, in this embodiment, although the first stepped portion 400p is formed on the lead film 400, the second stepped portion 250p is also formed on the sealing portion 250 at a position corresponding to the first stepped portion 400p, so the sealing strength between the sealing portion 250 and the lead film 400 may be improved. In addition, according to the high sealing strength between the sealing portion 250 and the lead film 400, the vent pressure when the gas generated in the battery cell 100 is discharged to the outside may also be increased, and safety may also be improved.

In addition, in the lead film 400 and the sealing portion 250, a first step d1 of the first stepped portion 400p and a second step d2 of the second stepped portion 250p are not limited in size, but they may have a size corresponding to the thickness D (height in the Z-axis direction) of the gas discharge guiding unit 450. More specifically, the first step d1 and the second step d2 may be equal to, greater than, or smaller than the thickness D of the gas discharge guiding unit 450, respectively. For example, the first step d1 and the second step d2 may have the same size as the thickness D of the gas discharge guiding unit 450, respectively. As another example, the first step d1 and the second step d2 may have a size of 50% to 150% of the thickness D of the gas discharge guiding unit 450.

Accordingly, in this embodiment, the first stepped portion 400p on the lead film 400 and the second stepped portion 250p on the sealing portion 250 may have a size corresponding to the thickness D of the gas discharge guiding unit 450, so the sealing strength between the sealing portion 250 and the lead film 400 and the vent pressure when the gas generated in the battery cell 100 is discharged to the outside may also be increased, and safety may also be improved.

More preferably, the first step d1 of the first stepped portion 400p and the second step d2 of the second stepped portion 250p may have the same size as each other, and may be the same as the thickness D of the gas discharge guiding unit 450, respectively.

Accordingly, in this embodiment, the sealing strength between the sealing portion 250 and the lead film 400 and the vent pressure when the gas generated in the battery cell 100 is discharged to the outside may also be increased, and the safety may also be further improved.

On the other hand, when the second step d2 has a size larger or smaller than the first step d1, an unsealed portion or an excessively sealed portion may occur between the lead film 400 and the sealing portion 250, so that the sealing strength between the sealing portion 250 and the lead film 400 and the vent pressure when the gas generated in the battery cell 100 is discharged to the outside may be lowered, and safety may also be reduced.

In addition, in the sealing portion 250, the second stepped portion 250p may be formed to have a uniform thickness. More specifically, in the sealing portion 250, the thickness of the second stepped portion 250p may surround the outer surface of the lead film 400 with the same thickness. In other words, in the sealing portion 250, the thickness of the second stepped portion 250p may surround the outer surface of the first stepped portion 400p with the same thickness.

Accordingly, in this embodiment, despite the fact that the first stepped portion 400p is formed on the lead film 400, the sealing portion 250 may surround the outer surface of the lead film 400 with a uniform thickness, so the sealing strength between the sealing portion 250 and the lead film 400 and the thickness change rate before and after the sealing portion 250 is sealed may be maintained uniformly. That is, it is possible to minimize the region where the sealing strength is relatively weak between the sealing portion 250 and the lead film 400, so that the vent pressure when the gas generated in the battery cell 100 is discharged to the outside may also be increased and the safety may also be improved.

The thickness D of the gas discharge guiding unit 450 may be 50 µm to 150 µm. When the thickness of the gas discharge guiding unit 450 satisfies the above range, the gas inside the battery case 200 may be more easily discharged to the outside.

Referring to FIGS. 4 and 5, the gas discharge guiding unit 450 may be located on the electrode lead 300. More specifically, the gas discharge guiding unit 450 may be located on the center of the electrode lead 300 based on the width direction of the lead film 400. In other words, the first stepped portion 400p and the second stepped portion 250p may be located on the center of the electrode lead 300 based on the width direction of the lead film 400, and the gas discharge guiding unit 450 may be inserted in the first stepped portion 400p.

Accordingly, in the lead film 400, since the gas discharge guiding unit 450 is located on the electrode lead 300, the gas discharge guiding unit 450 may have a relatively large area, and the amount of gas discharged by the gas discharge guiding unit 450 may also be increased effectively.

FIG. 6 is a cross-sectional view, taken along the axis A-A' of FIG. 3.

Referring to FIGS. 4 and 6, the gas discharge guiding unit 450 may extend along the protruding direction of the electrode lead 300. More specifically, in the gas discharge guiding unit 450, an end of the gas discharge guiding unit 450 adjacent to the outer side of the battery case 200 may be surrounded with the lead film 400. In other words, the end of the gas discharge guiding unit 450 adjacent to the outer side of the battery case 200 may not be exposed out of the battery case 200.

In addition, an end of the gas discharge guiding unit 450 adjacent to the inner side of the battery case 200 may be exposed inside the battery case 200. In other words, the end of the gas discharge guiding unit 450 adjacent to the inner side of the battery case 200 may be located on the same vertical line as the end of the lead film 400, or may be located at the inner side the battery case 200 compared to the end of the lead film 400.

Accordingly, in the lead film 400, since one end of the gas discharge guiding unit 450 adjacent to the outer side of the battery case 200 is not exposed out of the battery case 200, the sealing force of the battery case 200 by the lead film 400 and the sealing portion 250 may be improved. In addition, in the lead film 400, since the end of the gas discharge guiding unit 450 adjacent to the inner side of the battery case 200 is exposed inside the battery case 200, the gas generated in the battery cell 100 may be easily introduced along the gas discharge path formed by the gas discharge guiding unit 450 and may be effectively discharged to the outside.

Referring to FIG. 6 further, the thickness H (height in the Z-axis directions) of the lead film 400 on the upper surface of the gas discharge guiding unit 450 may be 100 µm to 300 µm, or 100 µm to 200 µm. When the thickness H of the lead film 400 satisfies the above range, the gas inside the battery case 200 may be more easily discharged to the outside.

Also, referring to FIG. 6, based on the protruding direction of the electrode lead 300, the width W of the lead film 400 surrounding the front surface of the gas discharge guiding unit 450 may be 2 mm or more, or 2 mm to 3 mm. When the width W of the lead film 400 satisfies the above range, the lead film 400 may not be torn as much as possible while the gas generated inside the battery case 200 is discharged to the outside.

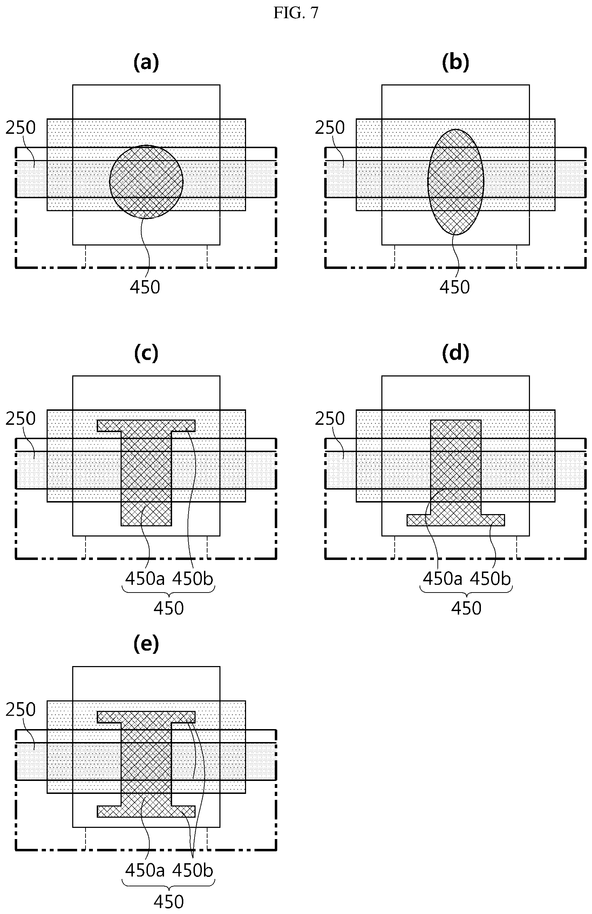

In addition, FIG. 7 shows various shapes of the gas discharge guiding unit. The gas discharge guiding unit 450 may be formed in a predetermined pattern to discharge gas inside the battery case 200.

For example, the gas discharge guiding unit 450 may have a rectangular shape extending along the protruding direction of the electrode lead 300 as shown in FIG. 4. However, the present disclosure is not limited thereto, and the gas discharge guiding unit 450 may have various shapes such as a circular shape as shown in (a) of FIG. 7, an elliptical shape as shown in (b) FIG. 7, and other linear or curved shapes.

As another example, the gas discharge guiding unit 450 may include a first gas discharge guiding unit 450a along the protruding direction of the electrode lead 300 and a second gas discharge guiding unit 450b extending in a direction perpendicular to the protruding direction of the electrode lead 300 as shown in (c) FIG. 7. In particular, the first gas discharge guiding unit 450a and the second gas discharge guiding unit 450b may be connected to each other. Here, the second gas discharge guiding unit 450b may be located at the outside of the sealing portion 250 and the inside of the lead film 400 based on the sealing portion 250 as shown in (c) of FIG. 7, or may be located at the inside of the sealing portion 250 and the outside of the lead film 400 based on the sealing portion 250 as shown in (d) of FIG. 7. Alternatively, the second gas discharge guiding unit 450b may be located both at the outside of the lead film 400 and at the inside of the lead film 400 with respect to the sealing portion 250 as shown in (e) of FIG. 7. However, the shape of the gas discharge guiding unit 450 is not limited to the above, and the gas discharge guiding unit 450 may be inserted in the lead film 400 in an appropriate shape.

Accordingly, by adjusting the shape of the gas discharge guiding unit 450 inserted in the lead film 400, it is possible to control the gas discharge performance of the gas discharge guiding unit 450 and the durability and airtightness of the lead film 400. In addition, if necessary, by changing the shape of the gas discharge guiding unit 450, it is possible to simplify the manufacturing process and reduce the cost.

For example, only one gas discharge guiding unit 450 may be included in the lead film 400 as shown in FIG. 4. As another example, a plurality of gas discharge guiding units 450 may be inserted in the lead film 400 and be positioned to be spaced apart from each other.

Accordingly, it is possible to control the gas discharge performance of the gas discharge guiding unit 450 and the durability and airtightness of the lead film 400 by adjusting the number of gas discharge guiding units 450 inserted in the lead film 400. In addition, if necessary, by minimizing the number of gas discharge guiding units 450, it is possible to simplify the manufacturing process and reduce the cost.

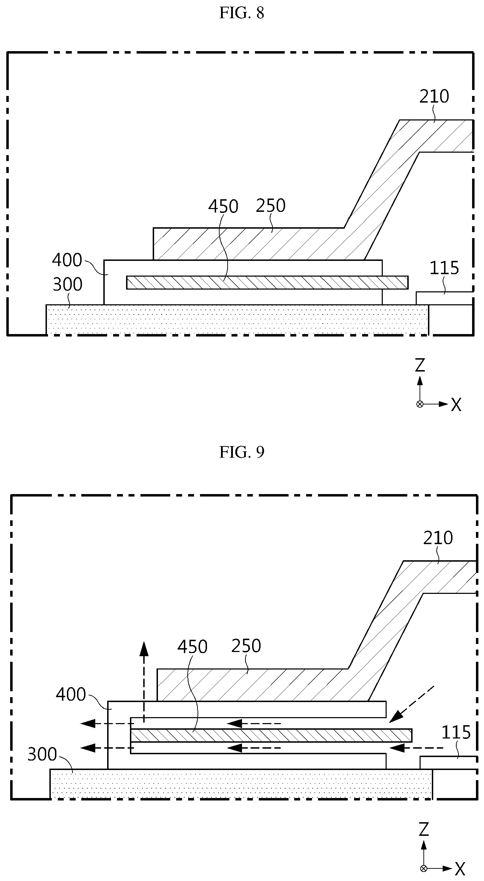

FIG. 8 is an enlarged view showing a two-dot chain line region of FIG. 6. FIG. 9 is a view showing a gas discharge path formed at an interface between a lead film and the gas discharge guiding unit of FIG. 8. In FIG. 9, the movement path of the gas is indicated by dotted arrows.

Referring to FIGS. 8 and 9, in this embodiment, a gas discharge path may be formed at the interface between the gas discharge guiding unit 450 and the lead film 400. More specifically, as shown in FIG. 9, the gas discharge path may mean a space in which at least a part of the interface between the gas discharge guiding unit 450 and the lead film 400 are spaced apart by the pressure of the gas generated in the battery case 200. That is, as shown in the dotted arrow direction of FIG. 9, the gas discharge path may mean a path through which gas is introduced into the space at the interface between the gas discharge guiding unit 450 and the lead film 400 or discharged to the outside.

Here, the adhesive force between the gas discharge guiding unit 450 and the lead film 400 may be smaller than the adhesive force between the lead film 400 and the electrode lead 300 and/or the adhesive force between the lead film 400 and the sealing portion 250. More specifically, when the pressure inside the battery case 200 is increased by the gas generated in the battery cell 100, the adhesive force of the interface between the gas discharge guiding unit 450 and the lead film 400 is relatively smaller than the adhesive force between the lead film 400 and other components, so at least a part of the interface between the gas discharge guiding unit 450 and the lead film 400 may be spaced apart by the pressure of the gas generated in the battery cell 100 as shown in FIG. 9.

That is, in this embodiment, as the gas discharge guiding unit 450 and the lead film 400 are spaced apart due to the relatively low adhesive force between the gas discharge guiding unit 450 and the lead film 400, the gas inside the battery cell 100 may be introduced into the gas discharge passage formed at the interface between the gas discharge guiding unit 450 and the lead film 400, and the gas may move along the gas discharge passage and be finally discharged through the lead film 400. The gas introduced into the gas discharge passage may be discharged to the outside according to the pressure difference with the outside.

However, the gas discharge path may also include a case where both the interface between the upper surface of the gas discharge guiding unit 450 and the lead film 400 and the interface between the lower surface of the gas discharge guiding unit 450 and the lead film 400 are spaced apart as shown in FIG. 9, as well as a case where the interface between the upper surface of the gas discharge guiding unit 450 and the lead film 400 or the interface between the lower surface of the gas discharge guiding unit 450 and the lead film 400 is spaced apart.

For example, the gas discharge guiding unit 450 may be a film layer made of at least one of polyimide (PI) and polyethylene terephthalate (PET). As another example, the gas discharge guiding unit 450 may be a coating layer made of liquid resin. However, the shape of the gas discharge guiding unit 450 or the material constituting the same is not limited thereto, and any shape or material that can be included in this embodiment as long as the adhesive force of the interface between the gas discharge guiding unit 450 and the lead film 400 can be relatively lowered than the adhesive force between the lead film 400 and other components.

Accordingly, since the battery cell according to this embodiment may form a gas discharge path at the interface between the gas discharge guiding unit 450 and the lead film 400 through a relatively low adhesive force between the gas discharge guiding unit 450 and the lead film 400, it is possible to effectively discharge the gas in the battery cell 100 to the outside while the manufacturing process is relatively easy.

Also, referring to FIGS. 4 and 6 again, one end of the gas discharge guiding unit 450 may be located inner than the inner surface of the sealing portion 250 based on the protruding direction of the electrode lead 300. In this specification, the inner surface of the sealing portion 250 means the end of the sealing portion 250 adjacent to the inside of the battery case 200, and one end of the gas discharge guiding unit 450 located inner than the inner surface of the sealing portion 250 means that one end of the gas discharge guiding unit 450 is located inner than the inner surface of the sealing portion 250 toward the inside of the battery case 200. When one end of the gas discharge guiding unit 450 is located inner than the inner surface of the sealing portion 250, it is not interfered with the sealing portion 250, so gas may be more easily introduced into the gas discharge guiding unit 450.

In addition, based on the protruding direction of the electrode lead 300, the other end of the gas discharge guiding unit 450 may be located outer than the outer surface of the sealing portion 250. In this specification, the outer surface of the sealing portion 250 means the end of the sealing portion 250 adjacent to the outside of the battery case 200, and the other end of the gas discharge guiding unit 450 located outer than the outer surface of the sealing portion 250 means that the other end of the gas discharge guiding unit 450 is located outer than the outer surface of the sealing portion 250 toward the outside of the battery case 200. For example, an interval P is placed between the outer surface of the sealing portion 250 and the other end of the gas discharge guiding unit 450. If the other end of the gas discharge guiding unit 450 is located outer than the outer surface of the sealing portion 250 as described above, the gas introduced into the gas discharge guiding unit 450 may be more easily discharged to the outside. For example, since the other end of the gas discharge guiding unit 450 is not interfered with the sealing portion 250, the gas introduced into the gas discharge guiding unit 450 may be more easily discharged to the outside.

Accordingly, the gas generated inside the battery cell 100 may be discharged toward the gas discharge guiding unit 450, and the gas introduced into the gas discharge guiding unit 450 may be easily discharged to the outside as shown in FIG. 9. In addition, the amount of gas generated inside the battery cell 100 and discharged to the outside may also be increased. In this way, the gas generated inside the battery case 200 may be easily discharged into the gas discharge guiding unit 450 and may be more easily discharged to the outside of the gas discharge guiding unit 450.

Moreover, as shown in FIG. 9, the gas introduced into the gas discharge guiding unit 450 may be particularly easily discharged along the Z-axis direction through the lead film 400 on the gas discharge guiding unit 450. For example, when the other end of the gas discharge guiding unit 450 is located outer than the outer surface of the sealing portion 250, the gas introduced into the gas discharge guiding unit 450 may be discharged along the Z-axis direction in the portion of the lead film 400 between the other end of the gas discharge guiding unit 450 and the outer surface of the sealing portion 250. As mentioned above, the thickness H of the lead film 400 on the upper surface of the gas discharge guiding unit 450 may be 100 µm to 300 µm, and based on the protruding direction of the electrode lead 300, the width W of the lead film 400 surrounding the front surface of the gas discharge guiding unit 450 may be 2 mm or more, or 2 mm to 3 mm. As described above, when the other end of the gas discharge guiding unit 450 is located outer than the outer surface of the sealing portion 250, the gas may be discharged through a portion placed in the Z-axis direction, which is a relatively thin portion of the lead film 400. Therefore, the gas may be discharged more easily. Moreover, if the gas discharge path is completely blocked by the sealing portion 250 when gas discharge occurs, the gas is not smoothly discharged. Thus, the interval P is placed between the outer surface of the sealing portion 250 and the other end of the gas discharge guiding unit 450 as described above, so that the gas may be smoothly discharged.

In addition, the gas discharge guiding unit 450 may further include a material having a function of absorbing or adsorbing moisture introduced from the outside or hydrofluoric acid generated therein. More specifically, the gas discharge guiding unit 450 may further include a getter material. Here, the getter material may refer to a material capable of evacuating using the action of gas adsorbed to a chemically activated metal film. For example, the getter material may include at least one of calcium oxide (CaO), lithium chloride (LiCl), silica (SiO₂), barium oxide (BaO), barium (Ba), and calcium (Ca). As another example, the getter material may have a structure of a metal organic framework (MOF). However, the getter material is not limited thereto, and all kinds of materials generally classified as getter materials may be included.

Accordingly, in this embodiment, since the gas discharge guiding unit 450 further includes a material capable of absorbing or adsorbing moisture or hydrofluoric acid, the gas discharge guiding unit 450 may minimize the penetration degree of moisture or hydrofluoric acid introduced into the battery cell 100 from the outside of the battery cell 100 more easily. In an embodiment of the present disclosure, the gas permeability of the gas discharge guiding unit 450 may be greater than or equal to 40 Barrer at 60°C. For example, the carbon dioxide permeability of the gas discharge guiding unit 450 may satisfy the above range.

For example, the gas discharge guiding unit 450 may include at least one of a polyolefin-based material, a fluorine-based material, and a porous ceramic-based material that satisfies the above gas permeability value. The polyolefin-based material may include at least one material selected from the group consisting of polypropylene, polyethylene, and polyvinyl difluoride (PVDF). The fluorine-based material may include at least one material selected from the group consisting of polytetrafluoroethylene and polyvinylidene fluoride.

In one embodiment of the present disclosure, the gas permeability of the lead film 400 may be 20 Barrer to 60 Barrer, or 30 Barrer to 40 Barrer at 60°C. For example, the carbon dioxide permeability of the lead film 400 may satisfy the above range. In addition, the gas permeability may satisfy the above range at 60°C based on the thickness H of the lead film 400 of 200 µm. If the gas permeability of the lead film 400 satisfies the above range, the gas generated inside the battery cell may be more effectively discharged.

In this specification, the gas permeability may be measured by ASTM F2476-20.

In one embodiment of the present disclosure, the moisture penetration amount of the lead film 400 may be 0.02 g to 0.2 g, or 0.02 g to 0.04 g, or 0.06 g, or 0.15 g for 10 years at 25°C, 50 %RH. If the moisture penetration amount of the lead film 400 satisfies the above range, the penetration of moisture from the lead film 400 may be more effectively prevented.

In an embodiment of the present disclosure, the lead film 400 may have a gas permeability of 20 Barrer to 60 Barrer at 60°C and a moisture penetration amount of 0.02 g to 0.2 g at 25°C, 50%RH for 10 years. When the gas permeability and moisture penetration amount of the lead film 400 satisfy the above ranges, it may be more effective to prevent moisture penetration from the outside while discharging the gas generated inside the battery cell 100.

The moisture penetration amount of the lead film 400 may be measured by adopting the ASTM F 1249 method. At this time, the moisture penetration amount may be measured using equipment officially certified by MCOON.

In an embodiment of the present disclosure, the lead film 400 may be formed of an adhesive composition made of at least one of polyolefin-based material, epoxy, and polyvinyl chloride (PVC). The polyolefin-based material may be polyethylene (PE), polypropylene (PP), or the like. For example, the lead film 400 may be polyethylene, polypropylene, or the like, that satisfies the gas permeability and/or moisture penetration amount values described above.

In addition, since the lead film 400 is made of the above-described material, the lead film 400 may maintain the airtightness of the battery cell 100 and prevent leakage of the internal electrolytic solution.

Hereinafter, a battery cell according to another embodiment of the present disclosure will be described. However, the battery cell according to this embodiment may be described mostly in the same way as the battery cell 100 described above, and the gas discharge guiding unit 450 inserted in the lead film 400 will be described in detail based the part that is different from the battery cell 100.

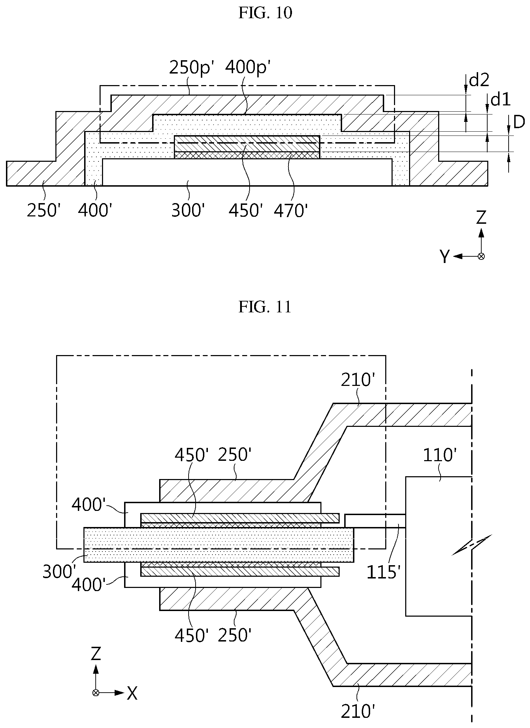

FIG. 10 is a cross-sectional view showing a battery cell according to another embodiment of the present disclosure, taken along the B-B' axis of FIG. 4.

Referring to FIG. 10, in this embodiment, unlike FIG. 5, the gas discharge guiding unit 450' may be located on the electrode lead 300'. More specifically, a separate lead film 400' may not be positioned between the gas discharge guiding unit 450' and the electrode lead 300'. That is, the gas discharge guiding unit 450' may be inserted into the first stepped portion 400p' of the lead film 400', and may be positioned adjacent to the electrode lead 300'. In other words, this embodiment may have a structure in which the lead film 400' surrounds the outer surface of the gas discharge guiding unit 450' after the gas discharge guiding unit 450' is attached or fixed on the electrode lead 300'.

Accordingly, as the gas discharge guiding unit 450' is positioned adjacent to the electrode lead 300', the thickness of the lead film 400' surrounding the gas discharge guiding unit 450' may also be relatively reduced, there is an advantage of reducing the manufacturing cost and simplifying the manufacturing process.

In addition, an adhesive layer 470' may be formed between the gas discharge guiding unit 450' and the electrode lead 300'. Here, the adhesive layer 470' may extend along the interface between the gas discharge guiding unit 450' and the electrode lead 300'. At this time, the adhesive layer 470' may be formed on the entire or part of the interface between the gas discharge guiding unit 450' and the electrode lead 300'.

For example, the adhesive layer 470' may be made of an adhesive tape or an adhesive binder. However, the present disclosure is not limited thereto, and any material having an adhesive performance capable of fixing the gas discharge guiding unit 450' and the electrode lead 300' to each other may be applied without limitation.

Accordingly, the gas discharge guiding unit 450' may be stably fixed to the electrode lead 300' by the adhesive layer 470'. That is, since the adhesive layer 470' having a relatively high adhesive force is formed between the gas discharge guiding unit 450' and the electrode lead 300', it is possible to prevent peeling caused by an increase in the internal pressure of the battery cell 100, and the sealing strength of the battery cell 100 may also be further improved.

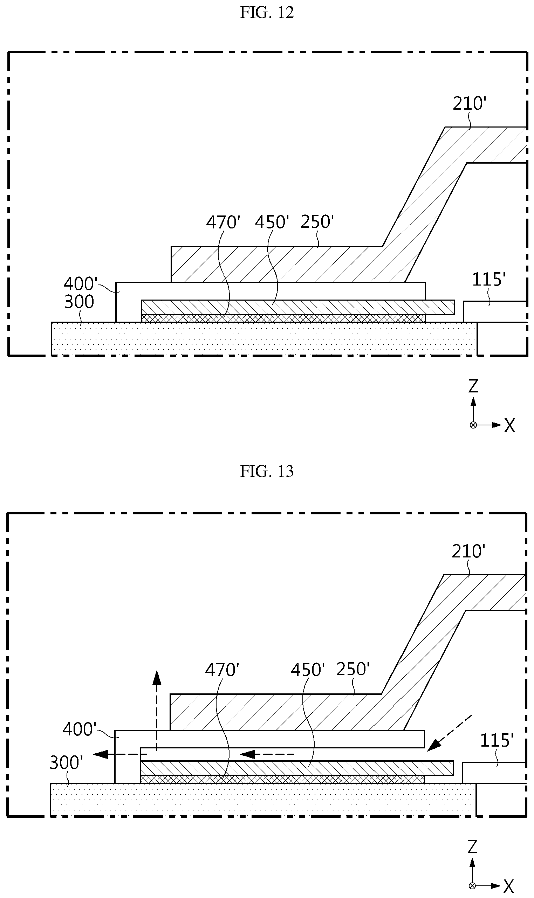

FIG. 11 is a cross-sectional view showing the battery cell having the cross-section of FIG. 10, taken along the axis A-A' of FIG. 3. FIG. 12 is an enlarged view showing a two-dot chain line region of FIG. 11. FIG. 13 is a diagram showing a gas discharge path formed at the interface between the lead film and the gas discharge guiding unit of FIG. 12. In FIG. 13, the movement path of the gas is indicated by dotted arrows.

Referring to FIGS. 11 to 13, in this embodiment, similarly to FIGS. 6 to 9, a gas discharge path may be formed at the interface between the gas discharge guiding unit 450' and the lead film 400'. However, in this embodiment, unlike FIGS. 6 to 9, the gas discharge guiding unit 450' is located adjacent to the electrode lead 300', and an adhesive layer 470' is formed between the gas discharge guiding unit 450' and the electrode lead 300'. Thus, a gas discharge path may not be formed at the interface between the gas discharge guiding unit 450' and the electrode lead 300'.

More specifically, in this embodiment, the adhesive force between the gas discharge guiding unit 450' and the lead film 400' may be smaller than the adhesive force between the adhesive layer 470' and the gas discharge guiding unit 450' and/or the adhesive force between the adhesive layer 470' and the electrode lead 300'.

More specifically, in this embodiment, when the pressure inside the battery cell 100 increases, the adhesive force of the interface between the gas discharge guiding unit 450' and the lead film 400' is relatively smaller than the adhesive force between the lead film 400' and other components. Thus, as shown in FIG. 13, at least a part of the interface between the gas discharge guiding unit 450' and the lead film 400' may be spaced apart by the internal pressure of the battery cell 100.

Moreover, in this embodiment, the adhesive force of the interface between the gas discharge guiding unit 450' and the lead film 400' may be smaller than the adhesive force between the gas discharge guiding unit 450' and the adhesive layer 470' and/or the adhesive force between the adhesive layer 470' and the electrode lead 300'. Thus, it is possible to prevent the interface between the gas discharge guiding unit 450' and the electrode lead 400' from being peeled off when the internal pressure of the battery cell 100 is increased.

That is, in this embodiment, since only the interface between the gas discharge guiding unit 450' and the lead film 400' may be peeled off to form a gas discharge path, it is possible to increase the sealing strength of the battery cell 100 while maintaining the gas discharge performance by the gas discharge path. In addition, according to the high sealing strength, the vent pressure when the gas generated in the battery cell 100 is discharged to the outside may also be higher, and safety may also be further improved.

Hereinafter, a battery cell manufacturing apparatus according to another embodiment of the present disclosure and a battery cell manufactured therefrom will be described in detail. This embodiment will be described based on the embodiment according to FIGS. 3 to 9, but the same description may also be applied to the embodiment according to FIGS. 10 to 13.

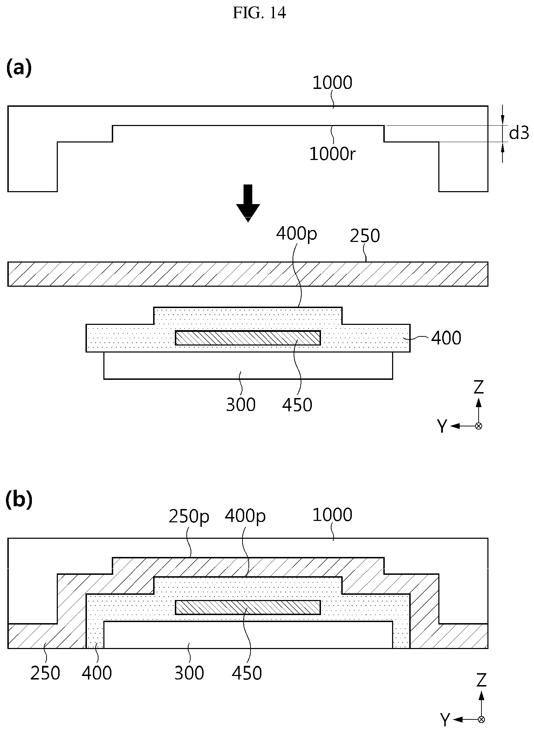

FIG. 14 is a diagram showing a battery cell manufacturing apparatus according to another embodiment of the present disclosure, and a battery cell manufactured through the same.

Referring to FIG. 14, the battery cell manufacturing apparatus according to another embodiment of the present disclosure includes a sealing tool 1000 for manufacturing the battery cell 100 and sealing the sealing portion 250, the electrode lead 300, and the lead film 400 together. Here, the sealing tool 1000 may seal the sealing portion 250, the electrode lead 300, and the lead film 400 by heat welding or press welding.

In addition, the sealing tool 1000 may include a third stepped portion 1000r concavely formed in a direction opposite to the sealing portion 250, the third stepped portion 1000r may surround the outer surface of the first stepped portion 400p, the second stepped portion 250p may be positioned between the third stepped portion 1000r and the outer surface of the first stepped portion 400p. More specifically, for the sealing portion 250 elongated shown in (a) FIG. 14, the sealing tool 1000 may form the second stepped portion 250p between the first stepped portion 400p and the third stepped portion 1000r as shown in (b) of FIG. 14 as the third stepped portion 1000r presses the sealing portion 250.

Here, the third stepped portion 1000r may refer to a portion concavely formed in a direction opposite to the sealing portion 250, with respect to the surface in which the sealing tool 1000 and the sealing portion 250 are in contact. More specifically, based on the position in the lead film 400 where the first stepped portion 400p is formed, the third stepped portion 1000r may refer to a portion concavely formed in a direction opposite to the sealing portion 250. In other words, in the sealing tool 1000, the third stepped portion 1000r may refer to a portion in which a step is generated between the portion where the first stepped portion 400p is formed and the portion where the first stepped portion 400p is not formed.

According to the above configuration, in this embodiment, even though the first stepped portion 400p is formed on the lead film 400, the third stepped portion 1000r of the sealing tool 1000 may form the second stepped portion 250p at a position corresponding to the first stepped portion 400p, so the sealing strength between the sealing portion 250 and the lead film 400 may be improved. Moreover, due to the high sealing strength between the sealing portion 250 and the lead film 400, the vent pressure when the gas generated in the battery cell 100 is discharged to the outside may also be increased, and safety may also be improved.

In addition, referring to FIGS. 5 and 14, in the sealing tool 1000, the third step d3 of the third stepped portion 1000r may have a size corresponding to the thickness D of the gas discharge guiding unit 450 together with the first step d1 and the second step d2, respectively. More specifically, the third step d3 may be identical to or larger or smaller than the gas discharge guiding unit 450. For example, the first step d1 to the third step d3 may have the same size. As another example, the third step d3 may have a size of 50% to 150% of the thickness D of the gas discharge guiding unit 450.

Accordingly, in this embodiment, the third stepped portion 1000r of the sealing tool 1000 may have a size corresponding to the thickness D of the gas discharge guiding unit 450, and thus may have a size similar to that of the first stepped portion 400p, and the second stepped portion 250p of the sealing portion 250 may also have a size similar to that of the first stepped portion 400p. That is, since the second stepped portion 250p of the sealing portion 250 may be formed to have a uniform thickness along the outer surface of the first stepped portion 400p, the sealing strength between the sealing portion 250 and the lead film 400 and the thickness change rate before and after the sealing portion 250 is sealed may be maintained uniformly. In addition, the sealing strength to the lead film 400 and the vent pressure when the gas generated in the battery cell 100 is discharged to the outside may also be increased, and safety may also be improved.

More preferably, the first step d1 to the third step d3 may have the same size as each other, and may be the same as the thickness D of the gas discharge guiding unit 450, respectively.

Accordingly, in this embodiment, the sealing strength between the sealing portion 250 and the lead film 400 and the vent pressure when the gas generated in the battery cell 100 is discharged to the outside may also be further increased, and the safety may also be further improved.

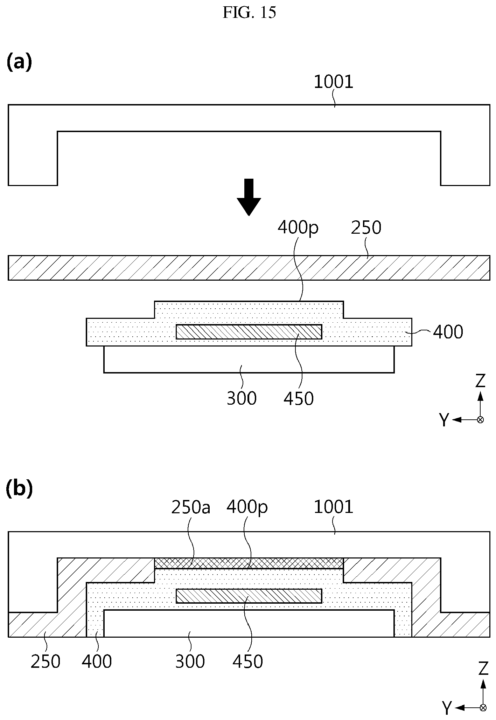

Meanwhile, when the third step d3 has a size larger or smaller than the first step d1, the thickness of the second step d2 of the sealing portion 250 may not be uniformly formed. In particular, an excessively high pressure may be applied to the sealing portion 250 to cause a thin thickness, or an excessively low pressure may be applied to the sealing portion 250 to generate an unsealed area. Thus, the sealing strength between the sealing portion 250 and the lead film 400 and the vent pressure when the gas generated in the battery cell 100 is discharged to the outside may be lowered, and safety may also be reduced. FIG. 15 is a diagram showing a battery cell manufacturing apparatus according to a comparative example and a battery cell manufactured through the same.

Referring to FIG. 15, the battery cell manufacturing apparatus according to the comparative example may be described in the same way as the battery cell manufacturing apparatus described above, except that the sealing tool 1001 does not include the third stepped portion 1000r.

Referring to FIG. 15, in the battery cell manufacturing apparatus according to the comparative example, when the third stepped portion 1000r is not formed at a position in the sealing tool 1001 corresponding to the first stepped portion 400p, an excessive sealing portion 250a may be formed in the sealing portion 250 as shown in (b) FIG. 15.

More specifically, as shown in (a) of FIG. 15, the sealing tool 1001 has a step with the same height for each position even though the first stepped portion 400p is formed on the lead film 400. At this time, the sealing tool 1001 applies a higher pressure to the portion of the sealing portion 250 facing the portion protruding by the first stepped portion 400p. Accordingly, an excessive sealing portion 250a having a relatively thin thickness may be formed in the portion of the sealing portion 250 facing the first stepped portion 400p, as shown in (b) FIG. 15.

Accordingly, as in the battery cell manufacturing apparatus according to the comparative example, without considering the height protruding by the first stepped portion 400p formed on the lead film 400, the sealing tool 1001 having a step of the same height may form the excessive sealing portion 250a on the sealing portion 250, so that the sealing strength between the excessive sealing portion 250a and the lead film 400 may be lowered. Moreover, due to the weak sealing strength between the excessive sealing portion 250a and the lead film 400, the vent pressure when the gas generated in the battery cell is discharged to the outside may be lowered, and safety may also be reduced.

In contrast, in the case of the battery cell manufacturing apparatus according to this embodiment, since the sealing tool 1000 includes the third stepped portion 1000r in consideration of the height protruding by the first stepped portion 400p formed on the lead film 400, the excessive sealing portion 250a as shown in (b) of FIG. 14 (b) may not be formed on the sealing portion 250, and the sealing strength and safety between the sealing portion 250 and the lead film 400 may also be improved.

A battery module according to another embodiment of the present disclosure includes the battery cell described above. Meanwhile, one or more battery modules according to this embodiment may be packaged in a pack case to form a battery pack.

The battery module described above and the battery pack including the same may be applied to various devices. These devices may be transportation means such as electric bicycles, electric vehicles, hybrid electric vehicles, and the like, but the present disclosure is not limited thereto, and the present disclosure may be applied various devices that can use a battery module and a battery pack including the same, which is also within the scope of the right of the present disclosure.

Although the preferred embodiment of the present disclosure has been described in detail above, the scope of the right of the present disclosure is not limited thereto, and various modifications and improvements made by those skilled in the art using the basic concept of the present disclosure defined in the appended claims also fall within the scope of the right of the present disclosure. The invention is defined by the appended claims.

### Reference Signs

100: battery cell
110: electrode assembly
200: battery case
210: accommodation portion
250: sealing portion
300: electrode lead
400: lead film
450: gas discharge guiding unit
1000: battery cell manufacturing apparatus

## Claims

1. A battery cell (100), comprising:
a battery case (200) having an accommodation portion (210; 210') in which an electrode assembly (110; 110') is mounted, and a sealing portion (250; 250') formed by sealing an outer periphery thereof;
an electrode lead (300; 300') electrically connected to an electrode tab (115; 115') included in the electrode assembly (110; 110') and protruding out of the battery case (200) via the sealing portion (250; 250'); and
a lead film (400; 400') located at a portion corresponding to the sealing portion (250; 250') in at least one of an upper portion and a lower portion of the electrode lead (300; 300'),
wherein the lead film (400; 400') includes a first stepped portion (400p; 400p')protruding in a direction opposite to the electrode lead (300; 300'), the first stepped portion (400p; 400p') comprising a first step (d1),
the sealing portion (250; 250') includes a second stepped portion (250p; 250p') surrounding an outer surface of the first stepped portion (400p; 400p'), the second stepped portion (250p; 250p') comprising a second step (d2),
and
a gas discharge guiding unit (450; 450') is inserted in the first stepped portion;
wherein the first step (d1) of the first stepped portion (400p) and the second step (d2) of the second stepped portion (250p) have a size corresponding to a height of the gas discharge guiding unit (450), respectively.

2. The battery cell (100) according to claim 1,
wherein the first step (d1) and the second step (d2) have the same size.

3. The battery cell (100) according to claim 1,
wherein the gas discharge guiding unit (450) extends along a protruding direction of the electrode lead (300), and an end of the gas discharge guiding unit (450) adjacent to an outer side of the battery case (200) is surrounded with the lead film (400).

4. The battery cell (100) according to claim 3,
wherein an end of the gas discharge guiding unit (450) adjacent to an inner side of the battery case (200) is exposed inside the battery case (200).

5. The battery cell (100) according to claim 1,
wherein a gas discharge path is formed at an interface between the gas discharge guiding unit (450) and the lead film (400).

6. The battery cell (100) according to claim 5,
wherein an adhesive force between the gas discharge guiding unit (450) and the lead film (400) is smaller than at least one of an adhesive force between the lead film (400) and the electrode lead (300) and an adhesive force between the lead film (400) and the sealing portion (250).

7. The battery cell (100) according to claim 6,
wherein the gas discharge guiding unit (450) is a film layer made of at least one of polyimide and polyethylene terephthalate.

8. The battery cell (100) according to claim 6,
wherein the gas discharge guiding unit (450) is a coating layer made of liquid resin.

9. The battery cell (100) according to claim 1,
wherein the second stepped portion (250d) is formed to have a uniform thickness.

10. The battery cell (100) according to claim 1,
wherein the gas discharge guiding unit (450') is located on the electrode lead (300'), and an adhesive layer (470') is formed between the gas discharge guiding unit (450') and the electrode lead (300)'.

11. The battery cell (100) according to claim 10,
wherein an adhesive force between the gas discharge guiding unit (450') and the lead film (400') is smaller than at least one of an adhesive force between the adhesive layer (470') and the gas discharge guiding unit and an adhesive force between the adhesive layer (470') and the electrode lead (300').

12. A battery cell manufacturing apparatus for manufacturing the battery cell (100) of claim 1, comprising:
a sealing tool (1000) configured to seal the sealing portion (250), the electrode lead (300), and the lead film (400) together,
wherein the sealing tool (1000) includes a third stepped portion (1000r) concavely formed in a direction opposite to the sealing portion (250), and
the third stepped portion (1000r) surrounds the outer surface of the first stepped portion (400p), the second stepped portion (250p) is located between the third stepped portion (1000r) and the outer surface of the first stepped portion (400p),
wherein a third step of the third stepped portion (d3) has a size corresponding to a height of the gas discharge guiding unit (450).

13. The battery cell manufacturing apparatus according to claim 12,
wherein a first step (d1) of the first stepped portion (400p) and a second step (d2) of the second stepped portion (250p) have a size corresponding to a height of the gas discharge guiding unit (450), respectively.

14. The battery cell manufacturing apparatus according to claim 13,
wherein the first step (d1) to the third step (d3) have the same size.

## Patentansprüche

1. Batteriezelle (100), umfassend:
ein Batteriegehäuse (200), welches einen Aufnahmeabschnitt (210; 210'), in welchem eine Elektrodenanordnung (110; 110') montiert ist, und einen Dichtungsabschnitt (250; 250') aufweist, welcher durch Abdichten eines Außenumfangs davon gebildet ist;
eine Elektrodenleitung (300; 300'), welche elektrisch mit einem Elektrodenstreifen (115; 115') verbunden ist, welcher in der Elektrodenanordnung (110; 110') umfasst ist, und aus dem Batteriegehäuse (200) über den Dichtungsabschnitt (250; 250') vorsteht; und
einen Leitungsfilm (400; 400'), welcher an einem Abschnitt angeordnet ist, welcher dem Dichtungsabschnitt (250; 250') entspricht, in wenigstens einem aus einem oberen Abschnitt und einem unteren Abschnitt der Elektrodenleitung (300; 300'),
wobei der Leitungsfilm (400; 400') einen ersten gestuften Abschnitt (400p; 400p') umfasst, welcher in einer Richtung entgegengesetzt zu der Elektrodenleitung (300; 300') vorsteht, wobei der erste gestufte Abschnitt (400p; 400p') eine erste Stufe (d1) umfasst,
wobei der Dichtungsabschnitt (250; 250') einen zweiten gestuften Abschnitt (250p; 250p') umfasst, welcher eine äußere Fläche des ersten gestuften Abschnitts (400p; 400p') umgibt, wobei der zweite gestufte Abschnitt (250p; 250p') eine zweite Stufe (d2) umfasst,
und
eine Gasabgabe-Führungseinheit (450; 450') in dem ersten gestuften Abschnitt eingesetzt ist;
wobei die erste Stufe (d1) des ersten gestuften Abschnitts (400p) und die zweite Stufe (d2) des zweiten gestuften Abschnitts (250p) eine Größe aufweisen, welche jeweils einer Höhe der Gasabgabe-Führungseinheit (450) entspricht.

2. Batteriezelle (100) nach Anspruch 1,
wobei die erste Stufe (d1) und die zweite Stufe (d2) dieselbe Größe aufweisen.

3. Batteriezelle (100) nach Anspruch 1,
wobei sich die Gasabgabe-Führungseinheit (450) entlang einer Vorstehrichtung der Elektrodenleitung (300) erstreckt und ein Ende der Gasabgabe-Führungseinheit (450) benachbart zu einer äußeren Seite des Batteriegehäuses (200) mit dem Leitungsfilm (400) umgeben ist.

4. Batteriezelle (100) nach Anspruch 3,
wobei ein Ende der Gasabgabe-Führungseinheit (450) benachbart zu einer inneren Seite des Batteriegehäuses (200) innerhalb des Batteriegehäuses (200) freigelegt ist.

5. Batteriezelle (100) nach Anspruch 1,
wobei ein Gasabgabe-Pfad an einer Schnittstelle zwischen der Gasabgabe-Führungseinheit (450) und dem Leitungsfilm (400) gebildet ist.

6. Batteriezelle (100) nach Anspruch 5,
wobei eine Haftkraft zwischen der Gasabgabe-Führungseinheit (450) und dem Leitungsfilm (400) kleiner als wenigstens eine aus einer Haftkraft zwischen dem Leitungsfilm (400) und der Elektrodenleitung (300) und einer Haftkraft zwischen dem Leitungsfilm (400) und dem Dichtungsabschnitt (250) ist.

7. Batteriezelle (100) nach Anspruch 6,
wobei die Gasabgabe-Führungseinheit (450) eine Filmlage ist, welche aus wenigstens einem aus Polyimid und Polyethylen-Terephthalat hergestellt ist.

8. Batteriezelle (100) nach Anspruch 6,
wobei die Gasabgabe-Führungseinheit (450) eine Beschichtungslage ist, welche aus flüssigem Harz hergestellt ist.

9. Batteriezelle (100) nach Anspruch 1,
wobei der zweite gestufte Abschnitt (250d) dazu gebildet ist, eine gleichförmige Dicke aufzuweisen.

10. Batteriezelle (100) nach Anspruch 1,
wobei die Gasabgabe-Führungseinheit (450') an der Elektrodenleitung (300') angeordnet ist und eine Haftlage (470') zwischen der Gasabgabe-Führungseinheit (450') und der Elektrodenleitung (300') gebildet ist.

11. Batteriezelle (100) nach Anspruch 10,
wobei eine Haftkraft zwischen der Gasabgabe-Führungseinheit (450') und dem Leitungsfilm (400') kleiner als wenigstens eine aus einer Haftkraft zwischen der Haftlage (470') und der Gasabgabe-Führungseinheit und einer Haftkraft zwischen der Haftlage (470') und der Elektrodenleitung (300') ist.

12. Batteriezellen-Herstellungsvorrichtung zum Herstellen der Batteriezelle (100) nach Anspruch 1, umfassend:
ein Abdichtungswerkzeug (1000), welches dazu eingerichtet ist, den Dichtungsabschnitt (250), die Elektrodenleitung (300) und den Leitungsfilm (400) gemeinsam abzudichten,
wobei das Abdichtungswerkzeug (1000) einen dritten gestuften Abschnitt (1000r) umfasst, welcher konkav in einer Richtung entgegengesetzt zu dem Dichtungsabschnitt (250) gebildet ist, und
der dritte gestufte Abschnitt (1000r) die äußere Fläche des ersten gestuften Abschnitts (400p) umgibt, wobei der zweite gestufte Abschnitt (250p) zwischen dem dritten gestuften Abschnitt (1000r) und der äußeren Fläche des ersten gestuften Abschnitts (400p) angeordnet ist,
wobei eine dritte Stufe des dritten gestuften Abschnitts (d3) eine Größe aufweist, welche einer Höhe der Gasabgabe-Führungseinheit (450) entspricht.

13. Batteriezellen-Herstellungsvorrichtung nach Anspruch 12,
wobei eine erste Stufe (d1) des ersten gestuften Abschnitts (400p) und eine zweite Stufe (d2) des zweiten gestuften Abschnitts (250p) jeweils eine Größe aufweisen, welche einer Höhe der Gasabgabe-Führungseinheit (450) entspricht.

14. Batteriezellen-Herstellungsvorrichtung nach Anspruch 13,
wobei die erste Stufe (d1) bis die dritte Stufe (d3) dieselbe Größe aufweisen.

## Revendications

1. Élément de batterie (100), comprenant :
un boîtier de batterie (200) ayant une partie de logement (210 ; 210') dans laquelle est monté un ensemble d'électrodes (110 ; 110'), et une partie de scellement (250 ; 250') formée par scellement d'une périphérie extérieure de la partie de logement ;
un fil d'électrode (300 ; 300') électriquement connecté à une patte d'électrode (115 ; 115') incluse dans l'ensemble d'électrodes (110 ; 110') et faisant saillie hors du boîtier de batterie (200) via la partie de scellement (250 ; 250') ; et
un film conducteur (400 ; 400') situé au niveau d'une partie correspondant à la partie de scellement (250 ; 250') dans au moins une parmi une partie supérieure et une partie inférieure du fil d'électrode (300 ; 300'),
dans lequel le film conducteur (400 ; 400') comporte une première partie étagée (400p ; 400p') faisant saillie dans une direction opposée au fil d'électrode (300 ; 300'), la première partie étagée (400p ; 400p') comprenant une première marche (d1),
la partie de scellement (250 ; 250') comporte une deuxième partie étagée (250p ; 250p') entourant une surface extérieure de la première partie étagée (400p ; 400p'), la deuxième partie étagée (250p ; 250p') comprenant une deuxième marche (d2),
et
une unité de guidage de décharge de gaz (450 ; 450') est insérée dans la première partie étagée ;
dans lequel la première marche (d1) de la première partie étagée (400p) et la deuxième marche (d2) de la deuxième partie étagée (250p) ont une taille correspondant à une hauteur de l'unité de guidage de décharge de gaz (450), respectivement.

2. Élément de batterie (100) selon la revendication 1,
dans lequel la première marche (d1) et la deuxième marche (d2) ont la même taille.

3. Élément de batterie (100) selon la revendication 1,
dans lequel l'unité de guidage de décharge de gaz (450) s'étend le long d'une direction de saillie du fil d'électrode (300), et une extrémité de l'unité de guidage de décharge de gaz (450) adjacente à un côté extérieur du boîtier de batterie (200) est entourée par le film conducteur (400).

4. Élément de batterie (100) selon la revendication 3,
dans lequel une extrémité de l'unité de guidage de décharge de gaz (450) adjacente à un côté intérieur du boîtier de batterie (200) est exposée à l'intérieur du boîtier de batterie (200).

5. Élément de batterie (100) selon la revendication 1,
dans lequel un trajet de décharge de gaz est formé au niveau d'une interface entre l'unité de guidage de décharge de gaz (450) et le film conducteur (400).

6. Élément de batterie (100) selon la revendication 5,
dans lequel une force adhésive entre l'unité de guidage de décharge de gaz (450) et le film conducteur (400) est inférieure à au moins l'une d'une force adhésive entre le film conducteur (400) et le fil d'électrode (300) et d'une force adhésive entre le film conducteur (400) et la partie de scellement (250).

7. Élément de batterie (100) selon la revendication 6,
dans lequel l'unité de guidage de décharge de gaz (450) est une couche de film constituée d'au moins l'un parmi du polyimide et du polyéthylène téréphtalate.

8. Élément de batterie (100) selon la revendication 6,
dans lequel l'unité de guidage de décharge de gaz (450) est une couche de revêtement constituée de résine liquide.

9. Élément de batterie (100) selon la revendication 1,
dans lequel la deuxième partie étagée (250d) est formée pour avoir une épaisseur uniforme.

10. Élément de batterie (100) selon la revendication 1,
dans lequel l'unité de guidage de décharge de gaz (450') est située sur le fil d'électrode (300'), et une couche adhésive (470') est formée entre l'unité de guidage de décharge de gaz (450') et le fil d'électrode (300)'.

11. Élément de batterie (100) selon la revendication 10,
dans lequel une force adhésive entre l'unité de guidage de décharge de gaz (450') et le film conducteur (400') est inférieure à au moins l'une d'une force adhésive entre la couche adhésive (470') et l'unité de guidage de décharge de gaz et d'une force adhésive entre la couche adhésive (470') et le fil d'électrode (300').

12. Appareil de fabrication d'élément de batterie pour fabriquer l'élément de batterie (100) selon la revendication 1, comprenant :
un outil de scellement (1000) configuré pour sceller ensemble la partie de scellement (250), le fil d'électrode (300), et le film conducteur (400),
dans lequel l'outil de scellement (1000) comporte une troisième partie étagée (1000r) formée de manière concave dans une direction opposée à la partie de scellement (250), et
la troisième partie étagée (1000r) entoure la surface extérieure de la première partie étagée (400p), la deuxième partie étagée (250p) est située entre la troisième partie étagée (1000r) et la surface extérieure de la première partie étagée (400p),
dans lequel une troisième marche de la troisième partie étagée (d3) présente une taille correspondant à une hauteur de l'unité de guidage de décharge de gaz (450).

13. Appareil de fabrication d'élément de batterie selon la revendication 12,
dans lequel une première marche (d1) de la première partie étagée (400p) et une deuxième marche (d2) de la deuxième partie étagée (250p) ont une taille correspondant à une hauteur de l'unité de guidage de décharge de gaz (450), respectivement.

14. Appareil de fabrication d'élément de batterie selon la revendication 13,
dans lequel les première marche (d1) à troisième marche (d3) ont la même taille.
